# EUROPEAN PATENT APPLICATION

(11) **EP 2 832 813 A1**
(43) Date of publication of application: **04.02.2015**
(21) Application number: 13770392.2
(22) Date of filing: 21.03.2013
(51) Int. Cl.: C09K 5/04, C10M 105/06, C10M 105/38, C10M 107/02, C10M 107/24, C10M 107/34, C10N 20/02, C10N 30/00, C10N 40/30

(54) **REFRIGERANT COMPOSITION AND METHOD FOR SUPPRESSING DECOMPOSITION OF FLUOROHYDROCARBON**

(30) Priority: 30.03.2012 JP 2012082199
(71) Applicant: Idemitsu Kosan Co., Ltd, Tokyo 100-8321 (JP)
(72) Inventor: MATSUMOTO, Tomoya, Ichihara-shi 299-0107 (JP)
(74) Representative: Hoffmann Eitle
(86) International application number: PCT/JP2013/058165
(87) International publication number: WO 2013/146549

(57) **Abstract**

A refrigerant composition contains: hydrofluorocarbon (HFC) with a GWP of 1000 or less; and pentafluoroethane. When the refrigerant composition is used in a refrigerating equipment such as an open-type automobile air-conditioner, an electric automobile air-conditioning equipment, a gas heat pump, an air conditioner, a refrigerator, a vending machine, a showcase, a water-heating system and a refrigerating/heating system, the amount of a fluorine compound generated as a result of decomposition of the refrigerant can be suppressed and thus the refrigerators can stably work for a long time.

## Description

### TECHNICAL FIELD

The present invention relates to a refrigerant composition used in an air-conditioning system, a refrigerator or the like and to a method for suppressing decomposition of hydrofluorocarbon.

### BACKGROUND ART

In view of the prevention of global warming, a refrigerant with a GWP (Global Warming Potential) that is lower than the GWP of a typical refrigerant such as R410A (approximately 2000 to 3000) has been sought in the field of air conditioning.

For instance, a specific saturated hydrofluorocarbon refrigerant such as R32 (GWP value: 675) attracts attention in terms of energy efficiency as having GWP lower than that of the typical refrigerant, high theoretical COP and heat conductivity and low refrigerant pressure loss, and thus has been particularly studied. However, during the development of an air-conditioning system, it has been found that R32 characteristically requires a higher discharge temperature of a compressor than typical R410A by approximately 20 degrees C, and it has been proven that this refrigerant thus decomposes to generate a fluorine compound (hydrogen fluoride). When an unstable unsaturated hydrofluorocarbon is used as a refrigerant, decomposition of the refrigerant becomes a more serious problem.

In connection with the above, Patent Literature 1 discloses that a specific A-type zeolite and a high-purity kaolin clay are introduced as a desiccant in a refrigeration cycle that uses a refrigerant such as HFC32. According to Patent Literature 1, such a desiccant can lower the concentration of fluorine ion in the refrigeration cycle. Patent Literature 2 discloses that a refrigerator oil containing an oxygen scavenger is used in a refrigerator that uses a refrigerant containing an unsaturated hydrofluorocarbon. Patent Literature 2 also discloses that decomposition of the unsaturated hydrofluorocarbon caused by oxygen can be suppressed.

### CITATION LIST

### PATENT LITERATURE(S)

Patent Literature 1: JP-A-11-335117
Patent Literature 2: JP-A-2011-226728

### SUMMARY OF THE INVENTION

### PROBLEMS TO BE SOLVED BY THE INVENTION

However, even the methods of Patent Literatures 1 and 2 cannot sufficiently suppress decomposition of a hydrofluorocarbon refrigerant or reduce the amount of a fluorine compound generated as a result of the decomposition. Especially, a hydrofluorocarbon refrigerant with a low GWP unfavorably tends to decompose.

An object of the invention is to provide: a refrigerant composition that contains majority amount of a low-GWP hydrofluorocarbon but is capable of regulating the amount of a fluorine compound generated as a result of refrigerant decomposition; and a method for suppressing decomposition of hydrofluorocarbon.

### MEANS FOR SOLVING THE PROBLEMS

As a result of a diligent study for solving the above problems, the present inventor has found that the amount of a fluorine compound generated as a result of the decomposition of a refrigerant can be regulated by blending pentafluoroethane to the refrigerant. The invention has been made based on the above findings. Specifically, according to aspects of the invention, the following refrigerant compositions and method for suppressing decomposition of a hydrofluorocarbon are provided.
[1] A refrigerant composition containing: hydrofluorocarbon (HFC) with a GWP of 1000 or lower; and pentafluoroethane.
[2] In the refrigerant composition, the HFC with the GWP of 1000 or less is a saturated HFC having 1 to 3 carbon atoms or an unsaturated HFC having 3 carbon atoms.
[3] In the refrigerant composition, a blending amount of the pentafluoroethane is in a range from 0.1 mass% to 35 mass% of a total amount of the refrigerant composition.
[4] The refrigerant composition further contains at least any one of carbon dioxide (CO₂), hydrocarbon (HC) having 5 or less carbon atoms, ammonia and fluorine-containing organic compound represented by a molecular formula (A) below,

   CₚO_{q}FᵣRₛ (A)

   in which: R represents Cl, Br, I or hydrogen; p is an integer of 1 to 6; q is an integer of 0 to 2; r is an integer of 1 to 14; and s is an integer of 0 to 13 with a proviso that when q is 0, p is an integer of 2 to 6 and one or more unsaturated carbon-carbon bonds are contained in a molecule.
[5] The refrigerant composition is used with a refrigerator oil containing a base oil containing at least one selected from among alkylbenzene, alkylnaphthalene, poly-alpha-olefin, polyvinylether, polyalkylene glycol, polycarbonate, polyol ester and an ether compound represented by a formula (1) below,

   Ra— [(ORb)n—(B)—(ORc)k] x—Rd (1)

   in which: Ra and Rd each represent a hydrogen atom, an alkyl group having 1 to 10 carbon atoms, an acyl group having 2 to 10 carbon atoms, or a hydrocarbon group having 2 to 6 bonds and having 1 to 10 carbon atoms; Rb and Rc each represent an alkylene group having 2 to 4 carbon atoms; n and k each are an integer of 0 to 20; x is an integer of 1 to 6; and (B) represents a polymer portion having 3 or more monomer units represented by a formula (2) below. 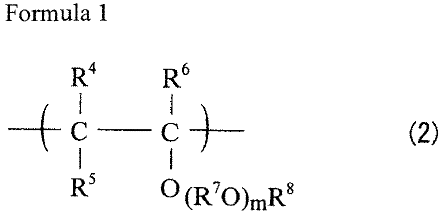 In the formula: R⁴, R⁵ and R⁶ each represent a hydrogen atom or a hydrocarbon group having 1 to 8 carbon atoms and are mutually the same or different; R⁷ represents a divalent hydrocarbon group having 1 to 10 carbon atoms or a divalent ether-bonded oxygen-containing hydrocarbon group having 2 to 20 carbon atoms; R⁸ represents a hydrogen atom or a hydrocarbon group having 1 to 20 carbon atoms; m is a number with an average of 0 to 10 and plural m are mutually the same or different in each unit; R⁴ to R⁸ are mutually the same or different in each unit; plural R⁷O are mutually the same or different; and m in the formula (2) is an integer of 1 or more when k and n in the formula (1) are both 0.
[6] The refrigerant composition is used with a refrigerator oil containing a base oil with a kinematic viscosity at 100 degrees C in a range from 1 to 50 mm²/s.
[7] The refrigerant composition is used with a refrigerator oil containing a base oil and at least one additive selected from among an extreme pressure agent, an oiliness agent, an antioxidant, an acid scavenger, a metal deactivator and an antifoaming agent.
[8] The refrigerant composition is used in a refrigerating equipment such as an open-type automobile air-conditioner, an electric automobile air-conditioning equipment, a gas heat pump, an air conditioner, a refrigerator, a vending machine, a showcase, a water-heating system and a refrigerating/heating system.
[9] A method of suppressing decomposition of hydrofluorocarbon (HFC), the method including using pentafluoroethane.

When the refrigerant composition according to the above aspect, in which hydrofluorocarbon (HFC) with a GWP of 1000 or less is blended with pentafluoroethane, is used, the amount of a fluorine compound generated as a result of decomposition of the refrigerant can be sufficiently regulated. Therefore, the refrigerant composition according to the above aspect can be favorably used in a variety of refrigerators.

### DESCRIPTION OF EMBODIMENT(S)

A refrigerant composition according to an exemplary embodiment of the invention (hereinafter also referred to as "the present refrigerant composition") is provided by blending pentafluoroethane in hydrofluorocarbon (HFC) with a GWP of 1000 or less. The exemplary embodiment will be described below in detail.

Examples of the HFC with a GWP of 1000 or less are saturated HFC and unsaturated HFC.

The saturated HFC is preferably an alkane fluoride having 1 to 3 and, especially, difluoromethane, 1,1-difluoroethane, 1,1,2-trifluoroethane, 1,1,2,2-tetrafluoroethane and 1,1,2,3,3-pentafluoropropane are favorable.

The unsaturated HFC with a GWP of 1000 or less is preferably an unsaturated hydrofluorocarbon compound having 2 or 3 carbon atoms and particularly preferably an unsaturated hydrofluorocarbon compound having 3 carbon atoms. For instance, propene fluoride is preferable. Specifically, the unsaturated HFC is preferably a compound represented by any one of molecular formulae such as C₃HF₃, C₃H₂F₄ and C₃H₃F₃ due to a low global warming potential thereof. Examples of the propene fluoride are a variety of isomers of pentafluoropropene, 3,3,3-trifluoropropene, 1,3,3,3-tetrafluoropropene and 2,3,3,3-tetrafluoropropene, among which 1,3,3,3-tetrafluoropropene (HFO1234ze) and 2,3,3,3-tetrafluoropropene (HFO1234yf) are particularly preferable due to a low global warming potential thereof.

A combination of a saturated hydrofluorocarbon refrigerant having 1 or 2 carbon atoms and an unsaturated hydrofluorocarbon refrigerant having 3 carbon atoms is also favorably usable. Examples of such a combination are a combination of HFO1234yf (mentioned above) and CH₂F₂ (HFC32), a combination of HFO1234ze and HFC32, a combination of HFO1234yf and CHF₂CH₃ (HFC152a), and a combination of HFO1234ze and HFC152a.

When hydrofluorocarbon (HFC) with a GWP of 1000 or less is blended with pentafluoroethane, the amount of a fluorine compound generated as a result of decomposition of the refrigerant can be regulated.

The blending amount of the pentafluoroethane is preferably in a range from 0.1 mass% to 35 mass% of the total amount of the refrigerant composition, more preferably in a range from 1 mass% to 20 mass%, further preferably in a range from 5 mass% to 20 mass%, and the most preferably in a range from 5 mass% to 10 mass%. When the blending amount is less than 0.1 mass%, it is not always possible to sufficiently enjoy the effects of the invention. On the other hand, when the blending amount exceeds 35 mass%, the GWP may be increased. The GWP of the refrigerant composition is preferably regulated to 1000 or below.

The present refrigerant composition may be further blended with at least any one of carbon dioxide (CO₂), hydrocarbon (HC) having 5 or less carbon atoms, ammonia and a fluorine-containing organic compound represented by the following molecular formula (A).

CₚO_{q}FᵣRₛ (A)

In the formula, R represents Cl, Br, I or hydrogen, p is an integer of 1 to 6, q is an integer of 0 to 2, r is an integer of 1 to 14, and s is an integer of 0 to 13 with the proviso that when q is 0, p is an integer of 2 to 6 and one or more unsaturated carbon-carbon bonds are contained in a molecule.

The refrigerant represented by the molecular formula (A) will be described below.

The molecular formula (A), which shows the types and numbers of elements in the molecule, represents a fluorine-containing organic compound in which the number p of carbon atoms C is 1 to 6. Any fluorine-containing organic compound having 1 to 6 carbon atoms possesses physical and chemical properties such as a boiling point, a freezing point and an evaporative latent heat required of a refrigerant.

In the molecular formula (A), the bonding configurations of p carbon atoms represented by Cp include carbon-carbon single bond, unsaturated bond such as carbon-carbon double bond and carbon-oxygen double bond. Unsaturated carbon-carbon bond is preferably carbon-carbon double bond in terms of stability. While the number of unsaturated carbon-carbon bond is 1 or more, the number is preferably 1.

In the molecular formula (A), the bonding configurations of q oxygen atoms represented by O_{q} are preferably oxygen derived from an ether group, a hydroxyl group or a carbonyl group. The number q of oxygen atoms may be 2, which is also true of when two ether groups, hydroxyl groups or the like are contained. On the other hand, when q is 0 (i.e., no oxygen atom is contained in the molecule), p is in a range from 2 to 6 and one or more unsaturated bonds such as carbon-carbon double bond are contained in the molecule. In other words, at least one of the bonding configurations of p carbon atoms represented by Cp is required to be unsaturated carbon-carbon bond.

In the molecular formula (A), R represents Cl, Br, I or hydrogen. R may be any one of Cl, Br, I and hydrogen but is preferably hydrogen, which is less likely to lead to ozone depletion.

As described above, preferable examples of the fluorine-containing organic compound represented by the molecular formula (A) are an unsaturated hydrofluorocarbon compound, a fluoroether compound, a fluoroalcohol compound and a fluoroketone compound.

Various types of lubricating oils can be used in a refrigerator in which the present refrigerant composition is used. A base oil of a lubricating oil may be a mineral oil or a synthetic base oil. The synthetic base oil is preferably at least one selected from among, for instance, alkylbenzene (AB), alkylnaphthalene (AN), poly-alpha-olefin (PAO), polyvinylether (PVE), polyalkylene glycol (PAG), polycarbonate (PC), polyol ester (POE) and an ether compound (ECP) represented by the above formula (1). The above base oils will be described below.

### (1) Mineral Oil

The mineral oil is preferably a so-called highly purified mineral oil, examples of which are: a purified oil obtained by atmospheric distillation of a paraffin-base crude oil, an intermediate-base crude oil or a naphthene-base crude oil or by ordinarily purifying a distillate oil obtained by vacuum distillation of a residual oil left after atmospheric distillation; a deeply dewaxed oil obtained by performing deep dewaxing after purification; and a hydrotreated oil obtained by hydrotreatment. The purification method is not particularly limited and thus a variety of methods are usable.

### (2) Alkylbenzene (AB)

Any alkylbenzene for a refrigerator oil may be usable, but, in terms of heat stability, alkylbenzene (including monoalkylbenzene, dialkylbenzene and trialkylbenzene) having 20 or more carbon atoms in an alkyl group in total (when plural alkyl groups exist, the sum of carbon atoms in the alkyl groups) is preferable and alkylbenzene having 20 or more carbon atoms in total and having two or more alkyl groups (e.g., dialkylbenzene) is more preferable.

### (3) Alkylnaphthalene (AN)

As the alkylnaphthalene according to the exemplary embodiment, alkylnaphthalene having a naphthalene ring bonded with two or three alkyl groups is favorably usable. In particular, the alkylnaphthalene further preferably has 20 or more carbon atoms in total in terms of heat stability. According to the exemplary embodiment, one of such alkylnaphthalenes may be singularly used or, alternatively, a mixture of two or more thereof may be used.

### (4) Poly-alpha-olefin (PAO)

As the poly-alpha-olefin according to the exemplary embodiment, a variety of poly-alpha-olefins are usable but an alpha-olefin polymer having 8 to 18 carbon atoms is typically used. Preferable examples of such a polymer are a 1-dodecene polymer, a 1-decene polymer and a 1-octene polymer in terms of viscosity index, low-temperature fluidity and evaporation loss. Among the above, a 1-decene polymer is preferable. Incidentally, according to the exemplary embodiment, the poly-alpha-olefin is preferably hydrotreated in terms of heat stability. One of such poly-alpha-olefins may be singularly used or, alternatively, a mixture of two or more thereof may be used.

### (5) Polyvinylether (PVE)

The polyvinylether usable as the base oil includes: polyvinyl ether obtained by polymerizing vinylether monomers (hereinafter referred to as polyvinylether I) and polyvinylether obtained by co-polymerizing vinylether monomers and hydrocarbon monomers having an olefin double-bond (hereinafter referred to as polyvinylether copolymer II).

Examples of the vinylether monomer usable as a material of the polyvinylether I are vinylmethylether, vinylethylether, vinyl-n-propylether and vinyl-isopropylether. These vinylether monomers can be prepared by a known method.

Examples of the vinylether monomer usable as a material of the polyvinylether copolymer II are the same as those of the vinylether monomer for the polyvinylether I, and one of the examples may be singularly used or, alternatively, two or more thereof may be used in combination. Examples of the hydrocarbon monomer having an olefin double-bond (i.e., the other material of the polyvinylether copolymer II) are ethylene, propylene, butenes, pentenes, hexenes, heptenes, octenes, diosobutylene, triisobutylene, styrene, alpha-methyl styrene and alkyl-substituted styrenes. In particular, polyethylvinylether, polyisobutylvinylether and a copolymer of polyethylvinylether and polyisobutylvinylether are preferable.

### (6) Polyalkylene Glycol (PAG)

According to the exemplary embodiment, the polyalkylene glycol usable as the base oil is, for instance, a compound represented by the following formula (3).

R⁹-[(OR¹⁰)ₘ₁-OR¹¹]ₙ₁ (3)

In the formula: R⁹ represents a hydrogen atom, an alkyl group having 1 to 10 carbon atoms, an acyl group having 2 to 10 carbon atoms or an aliphatic hydrocarbon group having 2 to 6 bonds and having 1 to 10 carbon atoms; R¹⁰ represents an alkylene group having 2 to 4 carbon atoms; R¹¹ represents a hydrogen atom, an alkyl group having 1 to 10 carbon atoms or an acyl group having 2 to 10 carbon atoms; n1 is an integer of 1 to 6; and m1 is a number with an average of m1 × n1 being within a range from 6 to 80.

Such polyalkylene glycols are favorably, for instance, polyoxypropylene glycol dimethyl ether, polyoxypropylene glycol monomethyl ether, poly(oxyethylene)(oxypropylene)glycol dimethyl ether, poly(oxyethylene)(oxypropylene)glycol monomethyl ether, polyoxypropylene glycol monobutyl ether and polyoxypropylene glycol diacetate in terms of economic efficiency and effects.

### (7) Polycarbonate (PC)

According to the exemplary embodiment, the polycarbonate compound usable as the base oil may be polycarbonate having two or more carbonate bonds in one molecule. Specifically, the polycarbonate compound may preferably be at least one selected from among (i) a compound represented by the following formula (4) and (ii) a compound represented by the following formula (5).

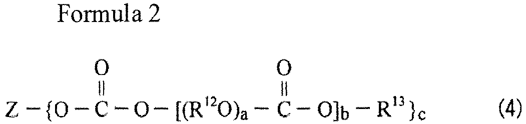

In the formula: Z represents a residue obtained by removing a hydroxyl group from a c-valent alcohol having 1 to 12 carbon atoms; R¹² represents a linear or branched alkylene group having 2 to 10 carbon atoms; R¹³ represents a monovalent hydrocarbon group having 1 to 12 carbon atoms or a group having an ether bond represented by R¹⁵(O-R¹⁴)d-, in which R¹⁵ represents a hydrogen atom or a monovalent hydrocarbon group having 1 to 12 carbon atoms, R¹⁴ represents a linear or branched alkylene group having 2 to 10 carbon atoms, and d is an integer of 1 to 20; a is an integer of 1 ot 30; b is an integer of 1 to 50; and c is an integer of 1 to 6.

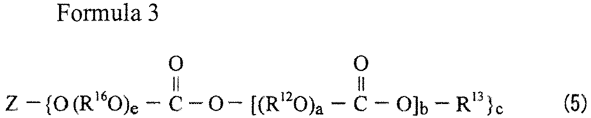

In the formula, R¹⁶ represents a liner or branched alkylene group having 2 to 10 carbon atoms, e is an integer of 1 to 20, and Z, R¹², R¹³, a, b and c are defined to be the same as above.

In the formulae (4) and (5), Z is a residue obtained by removing a hydroxyl group from any one of mono- to hexa-valent alcohols having 1 to 12 carbon atoms, and is particularly preferably a residue obtained by removing a hydroxyl group from a monovalent alcohol having 1 to 12 carbon atoms.

### (8) Polyol Ester (POE)

For the refrigerator-oil composition according to the exemplary embodiment, the polyol ester compound usable as the base oil is preferably an ester of a diol or a polyol having approximately 3 to 20 hydroxyl groups and a fatty acid having approximately 1 to 24 carbon atoms. In terms of hydrolytic stability, a polyol is particularly preferable, an ester of neopentyl glycol, trimethylolethane, trimethylolpropane, trimethylolbutane or pentaerythritol is more preferable, and an ester of pentaerythritol is the most preferable due to its particularly excellent compatibility with the refrigerant and hydrolytic stability.

In terms of lubricity, the fatty acid preferably has 3 or more carbon atoms, more preferably has 4 or more carbon atoms, further more preferably 5 or more carbon atoms, and most preferably has 10 or more carbon atoms. Further, in terms of compatibility with the refrigerant, the fatty acid preferably has 18 or less carbon atoms, more preferably has 12 or less carbon atoms, and most preferably has 9 or less carbon atoms. The fatty acid may be a linear or branched. While being preferably linear in terms of lubricity, the fatty acid is preferably branched in terms of hydrolytic stability. The fatty acid may be saturated or unsaturated. In particular, pentaerythritol octanoic acid nonanoic acid ester is preferable.

### (9) Ether Compound

For the refrigerator-oil composition according to the exemplary embodiment, for instance, an ether compound having a structure represented by the following formula (1) is preferable as the base oil.

Ra- [(ORb)n—(B)—(ORc)k] x—Rd (1)

In the formula: Ra and Rd each represent a hydrogen atom, an alkyl group having 1 to 10 carbon atoms, an acyl group having 2 to 10 carbon atoms, or a hydrocarbon group having 2 to 6 bonds and having 1 to 10 carbon atoms; Rb and Rc each represent an alkylene group having 2 to 4 carbon atoms; n and k each are an integer of 0 to 20; x is an integer of 1 to 6; and (B) represents a polymer portion having 3 or more monomer units represented by the following formula (2).

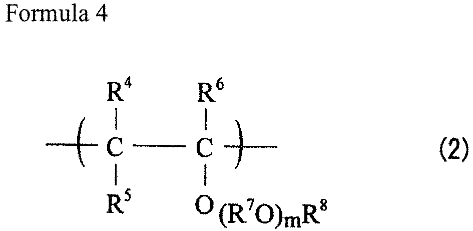

In the formula (2), R⁴, R⁵ and R⁶ each represent a hydrogen atom or a hydrocarbon group having 1 to 8 carbon atoms and may be mutually the same or different. R⁷ represents a divalent hydrocarbon group having 1 to 10 carbon atoms or a divalent ether-bonded oxygen-containing hydrocarbon group having 2 to 20 carbon atoms. R⁸ represents a hydrogen atom or a hydrocarbon group having 1 to 20 carbon atoms. m is a number with an average of 0 to 10 and plural m are mutually the same or different in each unit. R⁴ to R⁸ are mutually the same or different in each unit. Plural R⁷O are mutually the same or different. m in the formula (2) is an integer of 1 or more when k and n in the formula (1) are both 0.

The above ether compound may be prepared by polymerizing vinyl ether monomers using one of alkylene glycol, polyalkylene glycol and a monoether of alkylene glycol or polyalkylene glycol as an initiator.

The ether compound preferably has a terminal structure as follows. Specifically, in terms of stability of synthesis reaction, the ether compound preferably has a structure of the formula (1) where: Ra is a hydrogen atom; n is 0; Rd (the other end) is hydrogen atom and k is 0. In particular, a copolymer of polypropylene glycol and polyethylvinylether and a copolymer of polyethylene glycol and polyethylvinylether are preferable.

Regarding the above synthetic base oils (compounds), the molecular weight is preferably in a range from 150 to 5,000 and more preferably in a range from 300 to 3000 in terms of suppression of evaporation, flash point, properties required of a refrigerator oil, and the like. The viscosity index is preferably 60 or more.

According to the exemplary embodiment, one of the above base oils (mineral oils and synthetic base oils) may be singularly used or a mixture thereof may be used. In either case, a preferable kinematic viscosity at 100 degrees C is in a range from 1 mm²/s to 50 mm²/s, more preferably in a range from 3 mm²/s to 50 mm²/s, further more preferably in a range from 5 mm²/s to 30 mm²/s, and particularly preferably in a range from 5 mm²/s to 20 mm²/s.

The viscosity index of the base oil according to the exemplary embodiment is preferably 60 or more, more preferably 80 or more, and further more preferably 100 or more.

The refrigerator-oil composition according to the exemplary embodiment may further contain at least one additive selected from among an extreme pressure agent, an oiliness agent, an antioxidant, an acid scavenger, a metal deactivator and an antifoaming agent as long as an object of the invention is achieved.

Examples of the extreme pressure agent are: phosphorus extreme pressure agents such as phosphate, acid phosphate, phosphite, acid phosphite and amine salts thereof; metal carboxylate; and sulfur extreme pressure agents such as sulfurized fat and oil, sulfurized fatty acid, ester sulfide, olefin sulfide, dihydrocarbyl polysulfide, thiocarbamates, thioterpenes and dialkyl thiodipropionates.

The blending amount of the extreme pressure agent is preferably in a range from 0.001 mass% to 10 mass% of the total amount of the composition in terms of lubricity and stability.

Examples of the oiliness agent are: aliphatic saturated or unsatulated monocarboxylic acids such as stearic acid and oleic acid; polymerized fatty acids such as dimer acid and hydrogenated dimer acid; hydroxyl fatty acid such as ricinoleic acid and 12-hydroxystearic acid; aliphatic saturated or unsaturated monoalcohols such as lauryl alcohol and oleyl alcohol; aliphatic saturated or unsaturated monoamines such as stearylamine and oleylamine; aliphatic saturated or unsaturated monocarboxylic acid amides such as lauric acid amide and oleic acid amide; and partial esters of polyhydric alcohols such as glycerin and sorbitol and aliphatic saturated or unsaturated monocarboxylic acids.

The blending amount of the oiliness agent is preferably in a range from 0.01 mass% to 10 mass% of the total amount of the composition.

Preferable examples of the antioxidant are phenol antioxidants such as 2,6-di-tert-butyl-4-methylphenol, 2,6-di-tert-butyl-4-ethylphenol and 2,2'-methylenebis(4-methyl-6-tert-butylphenol) and amine antioxidants such as phenyl-alpha-naphthylamine and N.N'-diphenyl-p-phenylenediamine. The blending amount of the antioxidant is preferably in a range from 0.01 mass% to 5 mass% of the total amount of the composition in terms of effects, economic efficiency and the like.

Examples of the acid scavenger are phenyl glycidyl ether, alkyl glycidyl ether, alkylene glycol glycidyl ether (e.g., polypropylene glycol diglycidyl ether), phenyl glycidyl ester, alkyl glycidyl ester, cyclohexene oxide, alpha-olefin oxide, epoxy compounds such as epoxidized soybean oil. Among the above, phenyl glycidyl ether, alkyl glycidyl ether, alkylene glycol glycidyl ether, cyclohexene oxide and alpha-olefin oxide are preferable in terms of compatibility.

The blending amount of the acid scavenger is preferably in a range from 0.005 mass% to 5 mass% of the total amount of the composition in terms of effects and suppression of generation of sludge.

According to the exemplary embodiment, when the acid scavenger is blended, the stability of a composition containing the present refrigerant composition and the above base oil can be improved. Further, when the above extreme pressure agent and antioxidant are additionally used, the stability of the composition can be further improved.

An example of the metal deactivator is N-[N',N'-dialkyl (an alkyl group having 3 to 12 carbon atoms) aminomethyl]tolutriazole. Examples of the antifoaming agent are silicone oil and fluorinated silicone oil.

Incidentally, the kinematic viscosity at 40 degrees C of the refrigerator-oil composition containing the above base oil and additive is preferably in a range from 1mm²/s to 400 mm²/s, more preferably in a range from 3mm²/s to 300 mm²/s, and further preferably in a range from 5 mm²/s to 200 mm²/s.

When a refrigerator uses the present refrigerant composition, the refrigerant composition and the refrigerator-oil composition are used preferably in a mass ratio of 99/1 to 10/90 (refrigerant composition / refrigerator-oil composition) and more preferably in a mass ratio of 95/5 to 30/70. When the amount of the refrigerant composition falls below the above range, the refrigerating performance is unfavorably lowered. When the amount of the refrigerant composition exceeds the above range, the lubricity is unfavorably lowered.

A refrigerator (refrigerating system) in which the refrigerant composition according to the exemplary embodiment is favorably usable includes a compressor, a condenser, an expansion mechanism (e.g., capillary tube and expansion valve), a refrigerating system necessarily provided with an evaporator, a refrigerating system provided with an ejector cycle, and a refrigerating system provided with a dryer (desiccant: natural/synthetic zeolite). The compressor may be open, semi-hermetic or hermetically sealed and a motor of the hermetically sealed compressor may be an AC motor or a DC motor. A compression method may be rotary compression, scroll compression, swing compression or piston compression. The compressor may be a small-sized compressor (approximately 0.2 kW) or a large-sized compressor (approximately 30 kW).

The amount of water contained in such a refrigerating system is preferably 500 mass ppm or less and more preferably 300 mass ppm or less. The partial pressure of residual air is preferably 13 kPa or less, more preferably 10 kPa or less, and further more preferably 5 kPa or less.

In the refrigerant composition according to the exemplary embodiment, the predetermined refrigerant is blended with pentafluoroethane and the amount of a fluorine compound (especially hydrogen fluoride) generated as a result of decomposition of the refrigerant can be sufficiently regulated. Therefore, when the present refrigerant composition is used in a refrigerating equipment such as an open-type automobile air-conditioner, an electric automobile air-conditioning equipment, a gas heat pump, an air conditioner, a refrigerator, a vending machine, a showcase, a water-heating system and a refrigerating/heating system, the refrigerator can stably work for a long time.

### Example(s)

Next, the exemplary embodiment of the invention will be described in further detail with reference to Examples, which are by no means intended to limit the scope of the invention.

### Examples 1 to 3 and Comparatives 1 to 3

Refrigerant compositions formulated as shown in Tables 1 and 2 were subjected to the following oxidation-accelerating test and then evaluated in terms of various aspects. Evaluation results are also shown in Table 1.

### Oxidation-accelerating Test

An autoclave with an internal volume of 200mL filled with 30g of a refrigerant composition and a catalyst (Fe) was closed (air pressure: 200 Torr) and kept under the condition of 220 degrees C for 240 hours.

### pH of Extracted Water

After the completion of the above oxidation-accelerating test, it spent 10 minutes discharging the refrigerant composition in the autoclave into a 100 cc glass container with 50 g of pure water to obtain extracted water. Subsequently, the pH of the extracted water was measured according to JIS Z8802.

### Fluorine-ion Concentration in Extracted Water

The fluorine-ion concentration of the above extracted water was measured by an ion-chromatography method (according to JIS K0127).

### Analysis on Surface of Catalyst (Fe)

After the above oxidation-accelerating test, the catalyst (Fe) was rinsed with hexane and dried. The catalyst (Fe) was then applied to an EPMA (Electron Probe Micro Analyser) to analyze the amount of fluorine existing on a surface of the catalyst. The used device and conditions are as follows.
JXA900RL-type manufactured by JEOL Ltd.
Sample current: 5 × 10⁻⁸A
Accelerating voltage: 15kV
Analyzed area: 100 µm (diameter)
Detector: WDS (wavelength-dispersive type)
Analysis method: semiquantitative method

**Table 1**

| | | | Ref. | Ex. 1 | Ex. 2 | Ex. 3 |
|---|---|---|---|---|---|---|
| Refrigerant Compositional Elements | R32 | (mass%) | 100 | 95 | 90 | 80 |
| | Pentafluoroethane | (mass%) | 0 | 5 | 10 | 20 |
| Evaluation Results | Extracted Water pH | ( - ) | 2.3 | 4.3 | 4.9 | 5.1 |
| | Fluorine-ion Concentration in Extracted Water | (mass ppm) | 250 | 1 | 1> | 1> |
| | Fluorine Amount on Catalyst Surface | (mass%) | 40 | 22 | 16 | 13 |

**Table 2**

| | | | Comp. 1 | Comp. 2 | Comp. 3 |
|---|---|---|---|---|---|
| Refrigerant Compositional Elements | R32 | (mass%) | 95 | 90 | 80 |
| | R134a | (mass%) | 5 | 10 | 20 |
| Evaluation Results | Extracted Water pH | ( - ) | 2.2 | 2.5 | 2.4 |
| | Fluorine-ion Concentration in Extracted Water | (mass ppm) | 240 | 255 | 240 |
| | Fluorine Amount on Catalyst Surface | (mass%) | 36 | 38 | 36 |

### Evaluation Results

Regarding Reference Example shown in Table 1, for which R32 (100 mass%) was used as a refrigerant, the extracted water obtained after the oxidation-accelerating test had an extremely low pH and a high fluorine concentration. Further, the amount of fluorine on the surface of the catalyst was large. In view of the above, it has been found that a large amount of hydrogen fluoride was generated as a result of decomposition of the refrigerant.

In contrast, regarding the refrigerant composition according to the exemplary embodiment in which R32 was blended with pentafluoroethane (Examples 1 to 3), the pH of the extracted water was not lowered and the fluorine concentration of the extracted water was extremely low irrespective of a small blending amount of the pentafluoroethane.

On the other hand, as shown in Table 2, the refrigerant composition in which R32 was blended with R134a (1,1,1,2-tetrafluoroethane) (Comparatives 1 to 3) did not enjoy any blending effect.

It is notable that structurally similar hydrofluorocarbons are totally different in effect in reducing the amount of a fluorine compound (i.e., refrigerant resolvent) as described above.

In view of the above results, it can be understood that even when a refrigerator uses a structurally unstable hydrofluorocarbon (HFC) refrigerant, the refrigerator can stably work for a long time as long as the refrigerant composition according to the exemplary embodiment is used in the refrigerator.

## Claims

1. A refrigerant composition comprising:
hydrofluorocarbon (HFC) with a GWP of 1000 or lower; and
pentafluoroethane.

2. The refrigerant composition according to claim 1, wherein the HFC with the GWP of 1000 or less comprises a saturated HFC having 1 to 3 carbon atoms or an unsaturated HFC having 3 carbon atoms.

3. The refrigerant composition according to claim 1 or 2, wherein a blending amount of the pentafluoroethane is in a range from 0.1 mass% to 35 mass% of a total amount of the refrigerant composition.

4. The refrigerant composition according to any one of claims 1 to 3, further comprising at least any one of carbon dioxide (CO₂), hydrocarbon (HC) having 5 or less carbon atoms, ammonia and fluorine-containing organic compound represented by a molecular formula (A) below,
CₚO_{q}FᵣRₛ (A)
where: R represents Cl, Br, I or hydrogen; p is an integer of 1 to 6; q is an integer of 0 to 2; r is an integer of 1 to 14; and s is an integer of 0 to 13 with a proviso that when q is 0, p is an integer of 2 to 6 and one or more unsaturated carbon-carbon bonds are contained in a molecule.

5. The refrigerant composition according to any one of claims 1 to 4, wherein the refrigerant composition is used with a refrigerator oil comprising a base oil comprising at least one selected from among alkylbenzene, alkylnaphthalene, poly-alpha-olefin, polyvinylether, polyalkylene glycol, polycarbonate, polyol ester and an ether compound represented by a formula (1) below,
Ra— [(ORb)n—(B)—(ORc)k] x—Rd (1)
where: Ra and Rd each represent a hydrogen atom, an alkyl group having 1 to 10 carbon atoms, an acyl group having 2 to 10 carbon atoms, or a hydrocarbon group having 2 to 6 bonds and having 1 to 10 carbon atoms; Rb and Rc each represent an alkylene group having 2 to 4 carbon atoms; n and k each are an integer of 0 to 20; x is an integer of 1 to 6;
and (B) represents a polymer portion having 3 or more monomer units represented by a formula (2) below, 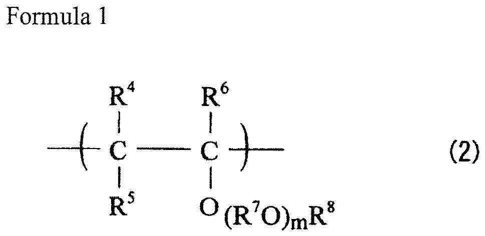 where: R⁴, R⁵ and R⁶ each represent a hydrogen atom or a hydrocarbon group having 1 to 8 carbon atoms and are mutually the same or different; R⁷ represents a divalent hydrocarbon group having 1 to 10 carbon atoms or a divalent ether-bonded oxygen-containing hydrocarbon group having 2 to 20 carbon atoms; R⁸ represents a hydrogen atom or a hydrocarbon group having 1 to 20 carbon atoms; m is a number with an average of 0 to 10 and plural m are mutually the same or different in each unit; R⁴ to R⁸ are mutually the same or different in each unit; plural R⁷O are mutually the same or different; and m in the formula (2) is an integer of 1 or more when k and n in the formula (1) are both 0.

6. The refrigerant composition according to any one of claims 1 to 5, wherein the refrigerant composition is used with a refrigerator oil comprising a base oil with a kinematic viscosity at 100 degrees C in a range from 1 to 50 mm²/s.

7. The refrigerant composition according to any one of claims 1 to 6, wherein the refrigerant composition is used with a refrigerator oil comprising a base oil and at least one additive selected from among an extreme pressure agent, an oiliness agent, an antioxidant, an acid scavenger, a metal deactivator and an antifoaming agent.

8. The refrigerant composition according to any one of claims 1 to 7, wherein the refrigerant composition is used in a refrigerating equipment comprising an open-type automobile air-conditioner, an electric automobile air-conditioning equipment, a gas heat pump, an air conditioner, a refrigerator, a vending machine, a showcase, a water-heating system and a refrigerating/heating system.

9. A method of suppressing decomposition of hydrofluorocarbon (HFC), the method comprising using pentafluoroethane.
